# DEMANDE DE BREVET EUROPEEN

(11) **EP 2 428 110 A1**
(43) Date de publication de la demande: **14.03.2012**
(21) Numéro de dépôt: 11181286.3
(22) Date de dépôt: 14.09.2011
(51) Int. Cl.: A01G 1/00

(54) **Dispositif de culture de plantes hors sol pour mur végétalisé**

(30) Priorité: 14.09.2010 FR 1057304
(71) Demandeur: Gaia Eau Creation, 69450 St Cyr au Mont d'Or (FR)
(72) Inventeur: Dussert-Girard, Valérie, 69450 St Cyr au Mont D'Or (FR); Francois, Denis, 69450 ST CYR AU MONT D'OR (FR)
(74) Mandataire: Le Cacheux, Samuel L.R.

(57) **Abrégé**

L'invention concerne un dispositif de culture de plantes hors sol pour mur végétalisé qui est enroulable et comprend :
- un dos **(2)** réalisé dans un matériau souple étanche à l'eau,
- une façade **(3)** qui est réalisée dans un matériau souple étanche à l'eau adapté pour la réalisation de découpe de fenêtres de mise en place de plantes,
- un support de culture flexible **(15)** qui est adapté pour supporter un réseau racinaire de plantes et disposé entre le dos **(2)** et la façade **(3)** et qui comprend une grille flexible **(16)** et au moins une couche **(17)** de feutre horticole hydrophile fixée à la grille **(16),**
- des moyens **(25)** de liaisons entre le dos **(2),** le support de culture **(15)** et la façade **(3),**
- des moyens **(10)** de fixation du dispositif sur une structure porteuse qui sont solidaires au moins du dos **(2).**

## Description

La présente invention concerne le domaine technique des murs ou parois végétalisés et, plus particulièrement, le domaine des structures de support et de croissance hors-sol pour des plantes ou végétaux en position sensiblement verticale.

Dans le domaine ci-dessus il est connu, pour réaliser un mur végétalisé, de mettre en oeuvre un panneau vertical rigide imputrescible recouvert d'un feutre synthétique qui sert à la mise en place et au développement de plantes ou végétaux comme cela est décrit par le brevet FR 2 634 971. Un brevet FR 2 934 460 a également décrit une structure de murs ou panneaux végétalisés mettant en oeuvre un panneau rigide sur lequel est adapté un support de culture recouvert ensuite par un grillage de maintien.

Les techniques connues de réalisation in situ de chaque mur végétalisé ne sont pas adaptées pour une préfabrication de la structure de végétalisation en atelier avant installation. De plus, la plupart des structures connues pour des murs végétalisés sont des structures lourdes qui induisent des temps de montage long et nécessitent des moyens de manutention qui les rendent inadaptées pour une mise en oeuvre par des non professionnels. Par ailleurs, les éléments constitutifs des murs végétalisés connus sont relativement encombrants ce qui rend leur transport difficile.

Ainsi, il est apparu le besoin d'un dispositif de culture de plantes hors sol pour la réalisation de murs végétalisés qui puisse être fabriqué en atelier, soit facile à transporter et présente une masse par mètre carré hors végétation relativement faible n'induisant pas la mise en oeuvre d'ancrages complexes et onéreux, ni le recours à des engins de manutentions.

Afin d'atteindre cet objectif, l'invention concerne un dispositif de culture de plantes hors sol pour mur végétalisé qui est enroulable et comprend:
- un dos réalisé dans un matériau souple étanche à l'eau,
- une façade qui est réalisée dans un matériau souple étanche à l'eau et adapté pour la réalisation de découpe de fenêtres de mise en place de plantes.
- un support de culture flexible qui est adapté pour supporter un réseau racinaire de plantes et disposé entre le dos et la façade et qui comprend une grille flexible et au moins une couche de feutre horticole hydrophile fixée à la grille,
- des moyens de liaisons entre le dos, le support de culture et la façade,
- des moyens de fixation du dispositif sur une structure porteuse qui sont solidaires au moins du dos.

Le caractère enroulable du dispositif de culture de plantes hors sol selon l'invention permet de le transporter enroulé sur lui-même de manière à en réduire l'encombrement. De plus, les différents éléments mis en oeuvre, à savoir le matériau souple étanche à l'eau formant le dos et la façade ainsi que le feutre horticole associé à la grille flexible pour former le support de culture flexible, permettent d'obtenir un dispositif de culture selon l'invention présentant un poids au mètre carré relativement réduit permettant de mettre en oeuvre des systèmes d'ancrages sur la structure porteuse peu onéreux. Par ailleurs, le caractère découpable de la façade permet soit une prédécoupe de la façade en atelier avant fourniture du dispositif à un utilisateur final, soit au contraire une livraison du dispositif avec la façade non découpée. L'utilisateur final pourra alors procéder à la découpe des fenêtres aux emplacements de son choix, au moyen d'outils de coupe simples tels que des ciseaux ou lames de coupe manuelle, en fonction de critères esthétiques et/ou des espèces de plantes utilisées.

Selon une forme préférée de réalisation, le support de culture est constitué de deux couches de feutre horticole hydrophile qui sont fixées à la grille. Un tel mode de réalisation du support de culture permet d'obtenir un substrat suffisant pour un bon développement des plantes en assurant leur maintien grâce à la grille tout en présentant une masse surfacique aussi réduite que possible.

Selon une variante de cette forme préférée de réalisation, les deux couches de feutre horticole sont liées par des lignes de coutures horizontales et/ou inclinées. La mise en oeuvre de ces lignes de coutures permet de ralentir l'écoulement de l'eau dans les couches de feutre horticole lorsqu'il est procédé à une irrigation à partir du haut du dispositif de culture selon l'invention.

Selon une caractéristique de la forme préférée de réalisation, chaque couche de feutre horticole comprend sur une face un film perforé de matière plastique. Ce film assure la longévité du feutre horticole en augmentant sa résistance mécanique et en limitant le développement d'algue à la surface du feutre. La mise en oeuvre de ce film perforé permet en outre de canaliser en partie au moins l'eau lorsqu'il est procédé à l'irrigation à partir du haut du dispositif de culture selon l'invention.

Selon une variante de cette caractéristique visant à optimiser cet effet de canalisation ou confinement de l'eau, les films perforés sont situés sur les faces externes de l'ensemble formé par les deux couches de feutre horticole.

Selon une caractéristique non strictement nécessaire de l'invention, la grille peut être intercalée entre deux couches de feutre horticole. Ainsi, le réseau racinaire se développe dans les deux couches de feutre horticole en traversant la grille ce qui contribue à un parfait maintien des plantes.

Selon une caractéristique de l'invention, le feutre horticole est un feutre à base de fibres textiles naturelles et/ou synthétiques.

Selon une autre caractéristique de l'invention, le matériau constitutif du dos et de la façade est opaque. Ce caractère opaque permet de limiter le développement d'algues sur et dans le feutre horticole. Le matériau constitutif du dos et de la façade sera, de plus, choisi pour présenter une bonne résistance aux UV.

Selon l'invention, le dispositif de culture peut être réalisé de toutes manières appropriées et par exemple sous la forme d'un assemblage de bandes empilées du matériau constitutif du dos, du support de culture et de la façade fixées les unes aux autres en étant ouvert sur les côtés. Selon une forme de réalisation de l'invention le dos et la façade définissent une enveloppe fermée sur au moins deux cotés opposés et à l'intérieure de laquelle le support de culture est enfermé.

Dans le cadre de cette forme de réalisation le dispositif peut présenter une forme générale rectangulaire et l'enveloppe formée par le dos et la face arrière est fermée sur trois côtés et ouverte sur un côté pour l'introduction du support de culture.

Dans le cadre de cette forme de réalisation, l'enveloppe peut comprendre au niveau d'un coté opposé au coté ouvert au moins un orifice d'évacuation de liquide. Ainsi, lors du montage sur une structure porteuse verticale, l'eau susceptible de s'accumuler au niveau du coté inférieur fermé est naturellement évacuée, ce qui limite les risques de putréfaction des racines et du support de culture.

Selon une caractéristique de l'invention, l'enveloppe comprend au niveau du coté ouvert des moyens de fixation sur la structure porteuse support.

Selon une autre caractéristique de l'invention, l'enveloppe comprend également au niveau de deux côtés, adjacents au côté ouvert, des moyens de fixation sur la structure porteuse.

Dans le cadre de cette forme de réalisation et afin de limiter les risques de détérioration du support de culture au niveau du côté ouvert, l'enveloppe peut comprendre, au niveau du côté ouvert, un rabat de fermeture. Ce rabat protège le support de culture du soleil et évite une détérioration du feutre par des insectes ou animaux, des oiseaux notamment.

Selon l'invention les moyens de fixation du dispositif de culture sur la structure porteuse peuvent être réalisés de toute manière appropriée et par exemple comprendre des trous de fixation traversant renforcés par des oeillets.

Selon une caractéristique de l'invention, le dos et/ou la façade comprend des moyens d'introduction d'un système d'irrigation.

Selon une autre caractéristique de l'invention, la façade du dispositif de culture comprend au moins une fenêtre de mise en place d'une plante.

Selon encore une caractéristique de l'invention, le dispositif de culture comprend des moyens de maintien d'au moins un tuyau d'irrigation. Selon l'invention ces moyens de maintien peuvent être réalisés de toute manière appropriée et, par exemple, comprendre au moins un fourreau tubulaire permettant l'introduction et le maintien d'un tuyau.

Dans le cas où le dispositif de culture de plantes hors sol selon l'invention est livré sans découpe préalable de la façade, il peut être fourni à l'utilisateur final un gabarit permettant de positionner l'emplacement et les dimensions des fenêtres à découper pour la mise en place des plantes. Ainsi, l'invention concerne également l'ensemble comprenant au moins un dispositif de culture de plantes hors sol selon l'invention et au moins un gabarit de positionnement de l'emplacement des fenêtres à découper pour la mise en place de plantes.

Bien entendu, les différentes formes et variantes de réalisation ainsi que caractéristiques de l'invention peuvent être associées les unes avec les autres selon diverses combinaisons dans la mesure où elles ne sont pas incompatibles ou exclusives les unes des autres.

Par ailleurs, diverses autres caractéristiques de l'invention ressortent de la description annexée effectuée en référence aux dessins qui illustrent une forme non limitative de réalisation d'un dispositif de culture de plantes hors sol conforme à l'invention.
- La figure 1 est perspective schématique d'un dispositif de culture de plantes hors sol conforme à l'invention.
- La figure 2 est une perspective partielle schématique, partiellement arrachée, du dispositif tel qu'illustré à la figure **1****.**
- La figure 3 est une coupe partielle de la partie supérieure du dispositif tel qu'illustrée aux figures 1 et 2.

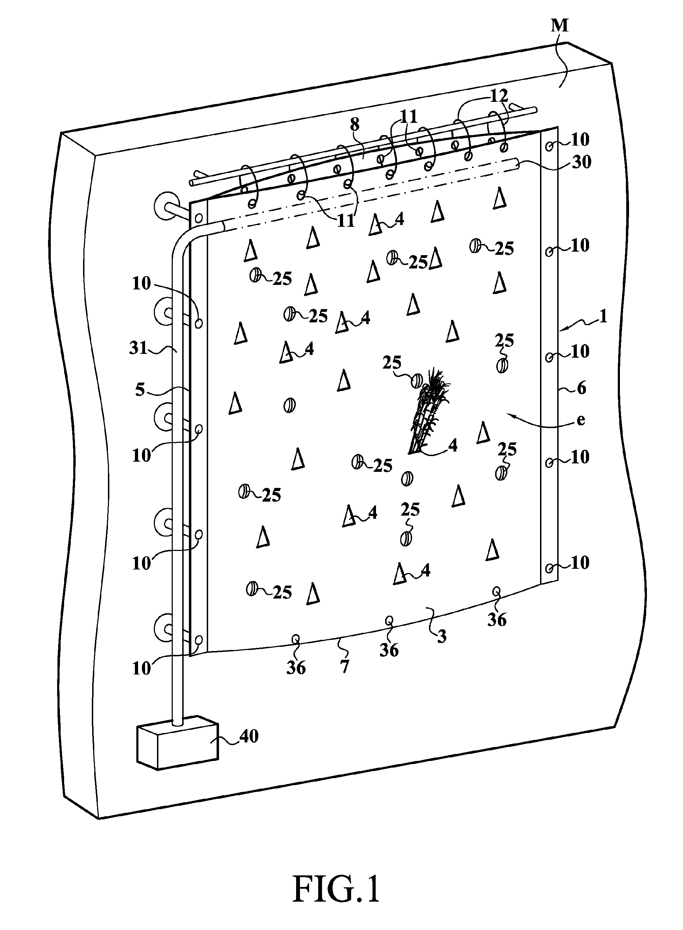

Un dispositif de culture de plantes hors sol pour mur végétalisé selon l'invention, tel qu'illustré à la figure 1 et désigné dans son ensemble par la référence **1,** est destiné à être fixé sur tout type de structure porteuse comme par exemple un mur **M** plan. Contenu du caractère souple et enroulable du dispositif de culture 1 selon l'invention, ce dernier peut aussi être adapté sur des structures porteuses de forme convexe, concave encore de forme gauche combinaisons de forme convexe et concave, tout en épousant la forme de ces structures porteuses.

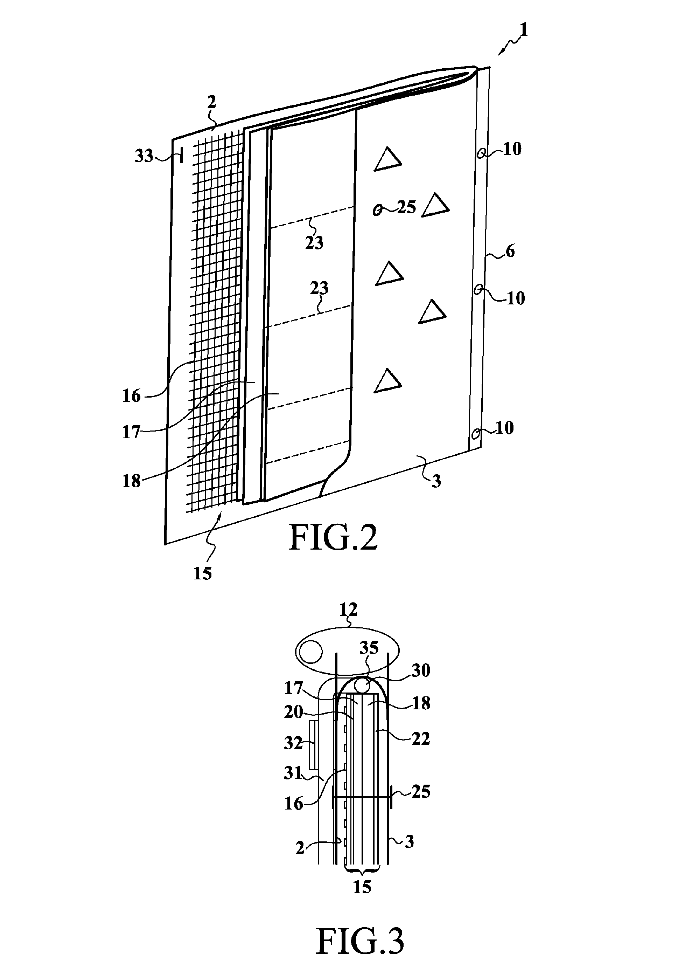

Comme le montre la figure 2, le dispositif de culture **1** comprend un dos **2** et une façade **3** qui sont tous deux réalisés dans un matériau souple étanche à l'eau et de préférence opaque de manière à limiter le passage des rayons lumineux et notamment des ultraviolets. Le matériau constitutif du dos **2** et de la façade **3** peut, par exemple, être une toile de bâche en polyester enduite d'un revêtement PVC présentant une résistance à la déchirure de 400N. un tel matériau présente de plus l'avantage d'être découpable pour la réalisation de fenêtres **4** de mise en place de plantes comme cela apparaîtra par la suite. La couleur extérieure du matériau constitutif du dos **2** et de la façade **3** peut être choisie en fonction de choix esthétique et/ou technique. Selon l'exemple illustré, le dos **2** et la façade **3** sont réalisés dans le même matériau et sont assemblés pour former une enveloppe **E,** telle qu'illustrée à la figure 1, qui présente une forme générale rectangulaire en étant fermée sur trois côtés, à savoir deux côtés latéraux opposés **5, 6** et un côté inférieur **7** tandis qu'elle est ouverte au niveau d'un coté supérieur **8.** Dans le cas présent, le dispositif de culture **1** est formé à partir d'un même morceau de toile de bâche replié sur lui-même au niveau du côté inférieur **7** et dont les bords sont soudés pour former les côtés latéraux **5** et **6.** Les bords supérieurs du dos **2** et de la façade **3** peuvent, en outre, être renforcés, au niveau du coté ouvert **8,** au moyen de bandes rapportées, non représentées.

Afin de permettre l'accrochage du dispositif de culture **1** sur la structure porteuse **M,** le dos **1** au moins et dans le cas présent le dos **2** et la façade **3,** constitutif de l'enveloppe **E,** comprennent des moyens de fixation qui selon l'exemple illustré sont formés des trous **10,** renforcés par des oeillets, aménagés dans les côtés latéraux **5** et **6.** Les moyens de fixation comprennent également, selon l'exemple illustré, des trous **11** aménagés en regard dans le dos **2** et la façade **3** à proximité du bord supérieur **8** pour le passage de liens de fixation **12.** Les trous **11** sont également renforcés par des oeillets non visibles aux figures. Les moyens de fixation constitués, ici, par les trous **10** et **11** sont répartis de manière à reprendre parfaitement la charge du dispositif de culture **1.**

Afin de permettre à des plantes de vivre et pousser, le dispositif de culture **1** comprend en outre un support de culture **15** adapté pour supporter un réseau racinaire de plantes et disposé entre le dos **2** et la façade **3.** Selon la forme préférée de réalisation illustrée, le support de culture **15** est constitué, d'une part, d'une grille **16** située contre le dos **2** et, d'autre part, de deux couches **17** et **18** de feutre horticole situées entre la grille **16** et la façade **3.**

Conformément à une caractéristique essentielle de l'invention, le support de culture **15** est flexible de manière à permettre un enroulement sur lui-même du dispositif de culture **1.** Ainsi, la grille **16** est flexible et enroulable. Afin de garantir la pérennité du dispositif de culture **1,** la grille **16** sera de préférence réalisée dans un matériau imputrescible résistant à la corrosion. La grille **16** pourra, par exemple, être une grille en polyéthylène à maille carrée de 1 à 2 cm de côté.

Le feutre horticole constitutif des couches **17** et **18** peut-être de toute nature appropriée et, par exemple, constitué de fibres synthétiques ou naturelles recyclées ou non, nappées, cardées et aiguilletées sur un film de polyéthylène micro perforé dont la fonction apparaîtra par la suite. Chaque couche de feutre horticole peut être choisie pour présenter un grammage compris entre 200 et 600g/m², valeur qui offre une bon compromis entre le poids et la capacité de rétention d'eau du support de culture.

Pour la fabrication du support de culture **15,** les deux couches **17** et **18** de feutre horticole seront placées l'une contre l'autre de manière que leurs films plastiques **20** et **22** soient situés vers l'extérieur comme le montre la figure 3. Ensuite, les deux couches **17** et **18** sont assemblées par des lignes de coutures **23** espacées, sensiblement parallèles et orientées de manière à être sensiblement horizontales ou légèrement inclinées lorsque le support de culture **15** est en position sensiblement verticale dans le dispositif de culture **1** fixé sur la structure porteuse **M.** L'ensemble des deux couches de feutre horticole **17** et **18** est ensuite fixé sur la grille **16** de toutes manières appropriées et, par exemple, au moyen d'épingles de fixation de tissus en nylon.

Le support de culture **15** ainsi constitué présente alors une certaine rigidité qui lui est conférée par la grille **16** ce qui facilite son introduction dans l'enveloppe **E** étanche par le côté ouvert **8** de cette dernière. Il doit être remarqué que selon la forme préférée de réalisation de l'invention, le support de culture **15** ne comprend que les deux couches de feutre horticole **17** et **18** associées à la grille **16** à l'exclusion de toute matière pulvérulente ou terre ou encore à l'exclusion de mousse végétalisable. Ainsi, le support de culture **15** présente un poids réduit tout en étant adapté à la croissance du réseau de racinaire des végétaux qui seront implantées.

Une fois le support de culture **15** disposé dans l'enveloppe **2,** il est mis en place des moyens de liaison **25** entre le dos **2,** le support de culture **15** et la façade **3.** Ces moyens de liaison **25** possèdent une double fonction, d'une part, de limitation de l'écartement entre le dos **2** et la façade **3** de manière à éviter l'apparition d'un ventre et, d'autre part, de reprise du poids du support de culture **15** et des plantes qui y seront implantées afin de permettre une répartition de l'effort sur une grande partie de la surface du dos **2** et de la façade **3.** Les moyens de liaison **25** peuvent être réalisés de toutes manières appropriées telle que par exemple sous la forme d'un système de rivets **25** traversants, tels qu'illustrés à la figure 3, et répartis sur la surface du dispositif de culture conforme à l'invention. Bien entendu, les moyens de liaison **25** pourraient aussi être formés par des coutures ou des agrafes.

Au terme des opérations de fabrication, il est obtenu un dispositif de culture **1** qui peut être roulé et livré à un utilisateur final.

Lors de la mise en oeuvre du dispositif de culture **15** ainsi constitué, l'utilisateur devra, avant fixation du dispositif de culture sur une structure porteuse, réaliser dans la façade **3** les fenêtres **4** destinées à la mise en place et au passage des plantes. À cet effet, il est fourni un gabarit donnant un possible schéma d'implantation avec les localisations des fenêtres **4** à réaliser. L'utilisateur pourra alors réaliser ces fenêtres **4** au moyen d'une paire de ciseaux, compte tenu du caractère découpable de la façade **3.**

Une fois les fenêtres réalisées **4,** l'utilisateur peut mettre en place un tuyau **30** perforé d'irrigation au niveau de la partie supérieure du support de culture accessible par le bord ouvert **8.** Ce tuyau d'irrigation **30** est raccordé à un tuyau d'alimentation **31** qui passe au travers d'une ouverture ou boutonnière **33** aménagée dans le dos **2.** Le tuyau d'alimentation peut aussi être maintenu par un fourreau **32** situé au niveau du dos **2** de manière à ne pas être visible lorsque le dispositif de culture **1** selon l'invention est monté sur la structure porteuse **M.**

Pendant l'irrigation, les films plastiques **20** et **22** définissent ensemble une sorte de canal pour la descente de l'eau dans les feutres horticoles et les coutures **23** contribuent à ralentir l'écoulement de l'eau d'irrigation de manière à assurer une parfaite imprégnation des couches de feutre horticole **17** et **18.**

Afin d'éviter que le support de culture **15** ne soit directement accessible au niveau du côté ouvert **8,** il peut être mis en oeuvre un rabat **35** réalisé dans le même matériau que la façade **3.** Le rabat **35** évite l'exposition au soleil etune détérioration du support de culture et plus particulièrement du feutre horticole par les oiseaux.

Le dispositif de culture **1** selon l'invention ainsi finalisé peut ensuite être adapté sur la structure porteuse **M** et des plantes peuvent être implantées dans les fenêtres **4.** Afin, de faciliter le développement de ces dernières, la première couche de feutre horticole **18** sera fendue en regard de chaque fenêtre de manière à permettre la mise en place du réseau racinaire de la plante correspondante entre les deux couches de feutre **17** et **18.**

Pour finir, le tuyau d'alimentation **31** peut être raccordé à un système d'irrigation **40** automatisée qui pourra être alimenté par un réservoir d'eau de pluie.

Afin d'éviter une accumulation de l'eau d'irrigation dans le bas du dispositif de culture **1,** ce dernier comprend au niveau du bord inférieur **7** au moins un et de préférence plusieurs orifices **36** évacuation de l'eau

Selon la forme de réalisation décrite précédemment, le dispositif de culture **1** selon l'invention est fourni à l'utilisateur final sans fenêtres dans la façade. Toutefois, selon l'invention, les fenêtres **4** de mise en place des plantes peuvent être réalisées dans la façade **3** avant livraison du dispositif de culture **1** à l'utilisateur.

Bien entendu, diverses autres modifications peuvent être apportées au dispositif de culture selon l'invention dans le cadre des revendications annexées.

## Revendications

1. Dispositif de culture de plantes hors sol pour mur végétalisé **caractérisé en ce qu'**il est enroulable et comprend :
- un dos **(2)** réalisé dans un matériau souple étanche à l'eau,
- une façade **(3)** qui est réalisée dans un matériau souple étanche à l'eau adapté pour la réalisation de découpe de fenêtres de mise en place de plantes,
- un support de culture flexible **(15)** qui est adapté pour supporter un réseau racinaire de plantes et disposé entre le dos **(2)** et la façade **(3)** et qui comprend une grille flexible **(16)** et au moins une couche **(17)** de feutre horticole hydrophile fixée à la grille **(16),**
- des moyens **(25)** de liaisons entre le dos **(2),** le support de culture **(15)** et la façade **(3),**
- des moyens **(10)** de fixation du dispositif sur une structure porteuse **(M)** qui sont solidaires au moins du dos **(2).**

2. Dispositif de culture selon la revendication 1, **caractérisé en ce que** le support de culture **(15)** est constitué de deux couches **(17,18)** de feutre horticole hydrophile qui sont fixées à la grille **(16).**

3. Dispositif de culture selon la revendication 2, **caractérisé en ce que** les deux couches de feutre horticole **(17,18)** sont liées par des lignes de coutures **(23)** horizontales et/ou inclinées.

4. Dispositif de culture selon la revendication 2 ou 3, **caractérisé en ce que** chaque couche **(17,18)** de feutre horticole comprend sur une face un film perforé **(20,22)** de matière plastique.

5. Dispositif de culture selon la revendication 4, **caractérisé en ce que** les films perforés **(20,22)** sont situés sur les faces externes de l'ensemble formé par les deux couches de feutre horticole **(17,18).**

6. Dispositif de culture selon l'une des revendications 2 à 5, **caractérisé en ce que** la grille **(16)** est intercalée entre deux couches de feutre horticole **(17,18).**

7. Dispositif de culture selon l'une des revendications précédentes, **caractérisé en ce que** le dos **(2)** et la façade **(3)** définissent une enveloppe **(E)** fermée sur au moins deux cotés opposés **(5,6)** et à l'intérieure de laquelle le support de culture **(15)** est enfermé.

8. Dispositif de culture selon la revendication 7, **caractérisé en ce qu'**il présente une forme générale rectangulaire et l'enveloppe **(E)** est fermée sur trois côtés **(5,6,7)** et ouverte sur un côté **(8)** pour l'introduction du support de culture **(15).**

9. Dispositif de culture selon la revendication 8, **caractérisé en ce que** l'enveloppe comprend au niveau du coté **(7)** opposé au coté ouvert **(8)** au moins un orifice **(36)** d'évacuation de liquide.

10. Dispositif de culture selon la revendication 8 ou 9, **caractérisé en ce que** l'enveloppe (E) comprend au niveau du coté ouvert **(8)** des moyens de fixation **(11)** sur la structure porteuse.

11. Dispositif de culture selon l'une des revendications 8 à 10, **caractérisé en ce que** l'enveloppe **(E)** comprend au niveau de deux côtés adjacents **(5,6)** au côté ouvert **(8)** des moyens de fixation **(10)** sur la structure porteuse.

12. Dispositif de culture selon l'une des revendications 8 à 11, **caractérisé en ce que** l'enveloppe **(8)** comprend au niveau du côté ouvert un rabat de fermeture **(35).**

13. Dispositif de culture selon l'une des revendications précédentes, **caractérisé en ce que** les moyens de fixation **(10,11)** sur la structure porteuse comprennent des trous de fixation traversant renforcés par des oeillets.

14. Dispositif de culture selon l'une des revendications précédentes **caractérisé en ce que** la façade **(3)** comprend au moins une fenêtre de mise en place d'une plante.

15. Ensemble comprenant au moins un dispositif **(1)** de culture de plantes hors sol selon l'une de revendications précédentes et au moins un gabarit de positionnement de l'emplacement des fenêtres à découper pour la mise en place de plantes.
